(19) Europäisches Patentamt / European Patent Office / Office européen des brevets

(11) **EP 3 516 578 B1**

(12) **FASCICULE DE BREVET EUROPEEN**

(45) Date de publication et mention de la délivrance du brevet:
**19.07.2023 Bulletin 2023/29**

(21) Numéro de dépôt: **17771461.5**

(22) Date de dépôt: **22.09.2017**

(51) Classification Internationale des Brevets (IPC):
**G06F 21/83** *(2013.01)* **G06F 21/84** *(2013.01)*
**G06F 21/86** *(2013.01)* **H05K 1/02** *(2006.01)*
**G07F 19/00** *(2006.01)*

(52) Classification Coopérative des Brevets (CPC):
**G06F 21/86;** G07F 19/20; H01H 2239/032;
H05K 1/0275

(86) Numéro de dépôt international:
**PCT/EP2017/073999**

(87) Numéro de publication internationale:
**WO 2018/055076 (29.03.2018 Gazette 2018/13)**

(54) **PIÈCE DE SUPPORT D'UN COMPOSANT D'UN DISPOSITIF ÉLECTRONIQUE SÉCURISÉ**

STÜTZTEIL FÜR EINE KOMPONENTE EINER SICHEREN ELEKTRONISCHEN VORRICHTUNG

SUPPORT PART FOR A COMPONENT OF A SECURE ELECTRONIC DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2016 FR 1658925**

(43) Date de publication de la demande:
**31.07.2019 Bulletin 2019/31**

(73) Titulaire: **Banks and Acquirers International Holding**
**75015 Paris (FR)**

(72) Inventeurs:
• **FROMENT, Marion**
  **26270 Loriol (FR)**
• **DEDIEU, Philippe**
  **07500 Guilherand-Granges (FR)**

(74) Mandataire: **Vidon Brevets & Stratégie**
**16B, rue de Jouanet**
**BP 90333**
**35703 Rennes Cedex 7 (FR)**

(56) Documents cités:
**EP-B1- 1 346 384     WO-A1-00/57262**

**Description**

**1. Domaine**

La présente technique se rapporte au domaine des dispositifs électroniques requérant des fonctions de sécurisation. La technique proposée se rapporte plus particulièrement à des pièces de support utilisables dans un système de sécurisation implémentant une technique sécurisation connue sous le nom de « fausse touche ». La technique proposée s'applique en particulier à des dispositifs de saisie tels que les terminaux de paiement.

**2. Art Antérieur**

Pour les dispositifs de saisie, tels que les terminaux de paiement, il est nécessaire de se protéger contre des tentatives de fraudes, de désassemblage, etc. Aussi, des mesures de protection sont mises en oeuvre. Ces mesures de protection comprennent des mesures de protection matérielles et des mesures de protection logicielles. Parmi les mesures de protection matérielles, on trouve notamment les techniques destinées à détecter le démontage du dispositif ou d'un composant du dispositif.

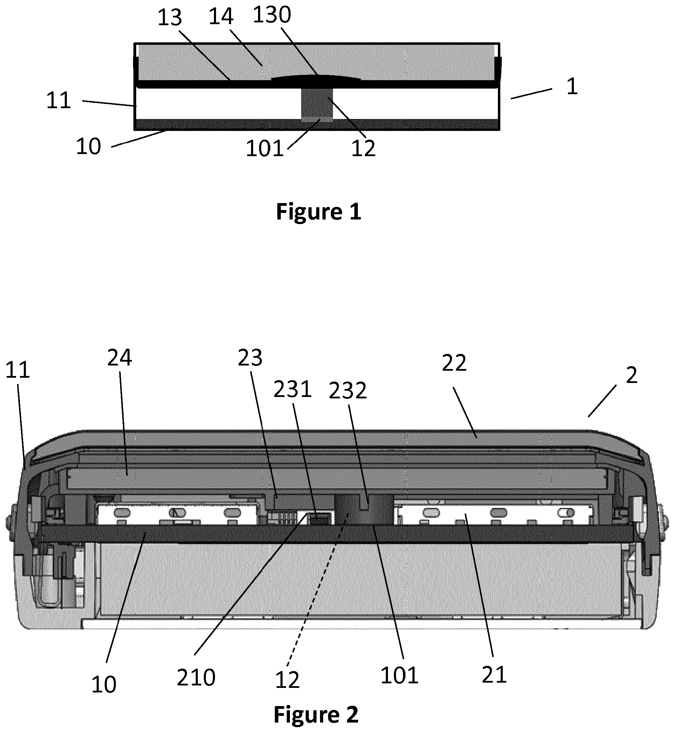

On connaît les techniques de « fausse touches » telle que EP1346384 qui sont utilisées pour renforcer la sécurité et vérifier que le dispositif ou un composant du dispositif ne subit pas une tentative de démontage. Comme illustré en relation avec la figure 1, le dispositif électronique 1 comprend une carte PCB 10, une pièce de support 13 d'un composant 14, un boîtier 11 et un dispositif de mise sous pression 12. Le composant 14, la pièce de support 13, le dispositif de mise sous pression 12 et la carte PCB sont assemblés dans un espace limité dans le boîtier 11. Le dispositif de mise sous pression 12 est compressé entre la pièce de support 13 et la carte PCB 10 de sorte qu'il exerce une force FD sur une fausse touche 101 de la carte PCB 10. La force FD exercée doit être suffisante pour activer la fausse touche 101. Lorsque le boîtier est démonté ou que le composant est enlevé, le dispositif de mise sous pression se décompresse et la force exercée sur la fausse douche 101 diminue voire disparaît. Par conséquent, la pression exercée sur la fausse touche 101 est moindre (ou disparaît) et l'intrusion peut est ainsi détectée (car le courant ne passe plus dans le circuit électrique formé dans la fausse touche).

La solution décrite ci-dessous de l'état de la technique présente cependant des inconvénients. En effet, lorsque le dispositif de mise sous pression 12 est compressé, il exerce également une force sur la pièce de support 13 au niveau d'une zone de contact 130. Cette force au niveau de la zone de contact entraîne une déformation plus ou moins importante de la pièce de support. La déformation est généralement plus importante pour les dispositifs électroniques compacts qui ont des pièces de support fines. Une force est exercée par exemple sur un composant situé au-dessus de la zone de contact déformée 130 par la pièce de support. La pression exercée sur ce composant au-dessus de la zone de contact peut entraîner une déformation de ce composant, entraînant une détérioration de la performance du composant voire une casse de ce composant. Par exemple, lorsque le composant en question est un module d'affichage LCD, la qualité d'affichage du module d'affichage peut être détériorée. Si la déformation est importante, le module d'affichage LCD peut aussi être irréparablement abîmé. Plus généralement, même s'il n'existe pas de composant au-dessus de la zone de contact, il se peut que cette zone de contact déformée se trouve directement sur le boîtier extérieur du dispositif, entraînant deux autres problèmes que sont dus à la déformation du boîtier extérieur : d'une part une diminution de l'esthétisme du produit et d'autre part la fourniture d'indices sur l'emplacement des fausses touches (le fraudeur sait, en observant les déformations, où se trouvent les fausses touches, et peut donc adapter le démontage du dispositif en conséquence).

Il est donc nécessaire de résoudre le problème de déformation (notamment d'un composant d'un dispositif électronique sécurisé) tout en implémentant la technique « fausse touche » pour contrer les tentatives de démontage.

**3. Résumé**

La technique proposée et définie dans les revendications indépendantes 1 et 4 ne présente pas le problème de l'art antérieur. Plus particulièrement, la technique proposée se rapporte à une pièce de support d'un composant d'un dispositif électronique. Il est proposé une pièce de support d'un composant d'un dispositif électronique, comprenant au moins un élément de réception d'un dispositif de mise sous pression d'une fausse touche , ladite pièce étant caractérisée en ce qu'elle comprend au moins un élément d'attache pour retenir ladite pièce à une carte PCB du dispositif électronique de sorte que le dispositif de mise sous pression est compressé entre ladite pièce de support et ladite carte PCB.

Ainsi, l'élément d'attache peut générer une force de maintien permettant de compenser au moins une partie de la force exercée sur la pièce de support par le dispositif de mise sous pression. La force entre le module et la pièce de support est diminuée. La déformation du composant est ainsi allégée ou éliminée.

Selon une caractéristique particulière, ledit élément de réception est un cylindre apte à recevoir une portion dudit dispositif de mise sous pression.

Le cylindre est utilisé comme un logement du dispositif de mise sous pression. Le dispositif de mise sous pression peut ainsi être maintenu de manière stable au sein du cylindre.

Selon une caractéristique particulière, ce que ledit élément d'attache prend la forme d'une patte.

Ainsi, la pièce de support peut être attachée à une carte PCB de manière simple et stable.

La technique se rapporte également à un système de sécurisation d'un dispositif électronique, comprenant une pièce de support d'un composant et une carte PCB comprenant au moins une fausse touche, ladite pièce de support comprenant au moins un élément de réception recevant un dispositif de mise sous pression de ladite fausse touche, ledit système étant caractérisé en ce que ladite pièce de support comprend un élément d'attache configuré pour retenir ladite pièce de support à la carte PCB de sorte que le dispositif de mise sous pression est compressé entre ladite pièce de support et ladite carte PCB.

Ce système sécurisé de protection permet de détecter des tentatives de démontage du dispositif électronique, tout en évitant la déformation de la pièce de support et du composant que la pièce de support supporte.

Selon une caractéristique particulière, ledit élément de réception est un cylindre, une portion du dispositif de mise sous pression étant insérée dans ledit cylindre.

Selon une caractéristique particulière, ledit élément d'attache prend la forme d'une patte.

Selon une caractéristique particulière, le système de sécurisation comprend un élément de maintien soudé sur ladite carte PCB, ladite patte étant insérée dans une encoche disposée dans ledit élément de maintien.

Selon un mode de réalisation particulier, ledit élément de maintien fait partie d'un élément de blindage électromagnétique solidarisé à ladite carte PCB.

Ainsi, le système de sécurisation utilisant l'élément de blindage existant dans un dispositif électronique pour attacher la pièce de support à la carte PCB. Il n'est plus nécessaire de disposer spécifiquement un élément dédié à cette fin.

La technique se rapporte également à un dispositif électronique comprenant un système de sécurisation tel que présenté précédemment.

Ainsi, tout type de dispositif électronique peut implémenter le système de sécurisation pour détecter les tentatives de démontage du dispositif.

Selon un mode de réalisation particulier, un élément d'attache attachée à la carte PCB génère une force FM maintenant ladite pièce de support attachée à ladite carte PCB, ledit dispositif de mise sous pression exerçant une force FD sur la fausse touche de la carte PCB et une force FD' sur la pièce de support, ledit composant exerçant une force FC sur ladite pièce de support, la force FD étant suffisante pour activer la fausse touche.

Selon une caractéristique particulière, la valeur de la force FM est égale à la valeur de la force FD'.

Ainsi, la force FM compense la totalité de la force FD'. Le système de sécurisation fonctionne indépendamment du composant supporté par la pièce de supporte. Les tentatives de démontage de la pièce de support peuvent être détectées par le dispositif électronique.

Selon un mode de réalisation particulier, la valeur de la force FD' est égale à la valeur de la somme de la force FM et de la force FC, la valeur de la force FC étant supérieure à zéro.

Ainsi, la force FM compense seulement une partie de la force FD'. La force FC compense la partie restante de la force FD'. Lorsqu'un attaquant tente de démonter le module supporté par la pièce de support, la force FC diminue. Ceci entraîne une diminution de la force FD. La fausse touche est désactivée car la force FD est insuffisante pour maintenir la pression sur cette fausse touche. La tentative de démontage est ainsi détectée.

Selon un mode de réalisation particulier, ledit composant est un module d'affichage LCD.

Ainsi, la qualité d'affichage du module d'affichage LCD est maintenu tout en implémentant la technique fausse touche pour détecter une tentative de démontage dudit module d'affichage.

Selon une caractéristique particulière, le dispositif électronique comprend un boîtier, ledit module d'affichage étant disposé entre la partie supérieure dudit boîtier et la pièce de support.

Ainsi, le module d'affichage LCD est maintenu entre la partie supérieure du boîtier et la pièce de support du module. Le démontage de la partie supérieure du dispositif électronique peut ainsi être détecté par le système de sécurisation.

Selon un mode de réalisation particulier, ledit dispositif électronique est un terminal de paiement.

Ainsi, le système de sécurisation de la technique proposée permet d'améliorer la sécurité d'un terminal de paiement qui est très sensible aux intrusions par démontage.

## 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :

- la figure 1 illustre un dispositif électronique de l'état de la technique implémentant la technique « fausse touche » au niveau d'une pièce de support d'un composant ;
- la figure 2 illustre une vue en coupe d'un dispositif électronique de la technique proposée ;
- la figure 3 est une vue agrandie d'un système de sécurisation dans un dispositif électronique de la technique proposée ;
- la figure 4 est une vue isométrique de la face postérieure de la pièce de support comprenant le cylindre de réception et la patte selon un mode de réalisation ;
- la figure 5 est une vue isométrique d'une carte mère et de la fausse touche protégées par le cylindre.

## 5. Description détaillée

Comme explicité précédemment, il est nécessaire de disposer de système de sécurisation qui, tout en apportant un niveau de sécurité identique à l'art antérieur, permette également de ne pas exercer de pression sur les composants pouvant se situer au-dessus des fausses touches.

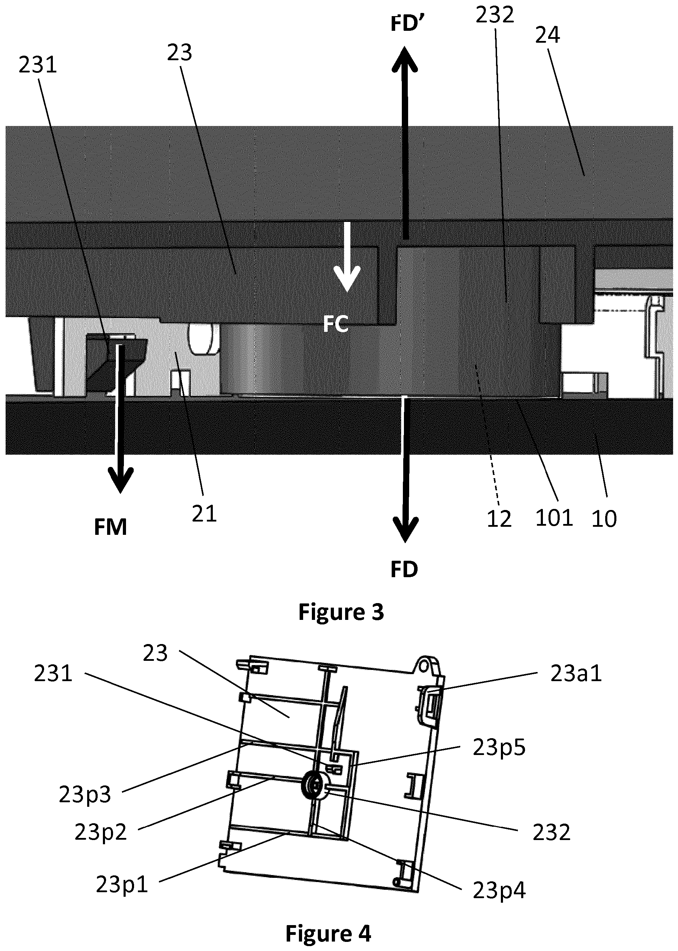

Ainsi afin de résoudre le problème relatif à la déformation d'un composant d'un dispositif électronique de l'état de la technique, les inventeurs ont conçu une nouvelle pièce de support de composant, permettant d'alléger et/ou d'éliminer la déformation de la pièce de support entraînée par la compression d'un dispositif de mise sous pression. La déformation du composant supporté par la pièce de support est, par conséquent, au minimum allégée voire éliminée. La nouvelle pièce de support, le dispositif de mise sous pression et la carte PCB constituent un système de sécurisation selon la technique proposée. Un mode de réalisation d'un dispositif électronique implémentant le système de sécurisation selon la technique proposée est présenté en relation avec les figures 2 et 3.

Le principe général de la technique proposée consiste à créer une pièce de support comprenant un ou plusieurs élément(s) d'attache. L'élément d'attache peut être attaché à une carte PCB pour compenser au moins une partie de la force exercée par le dispositif de mise sous pression sur la pièce de support au niveau de l'élément de réception du dispositif de mise sous pression. La déformation de la pièce de support peut ainsi être allégée et/ou éliminé. Par conséquence, la déformation du composant supporté par la pièce de support est allégée et/ou éliminée. Par exemple, lorsque le composant est un module d'affichage LCD, la qualité d'affichage de ce module d'affichage LCD est ainsi améliorée.

La figure 2 est une vue en coupe d'un dispositif électronique implémentant la technique proposée selon un mode de réalisation. Ce dispositif électronique 2 (tel qu'un terminal de paiement) comprend un boîtier 11, une carte PCB 10, une pièce de support 23 d'un module d'affichage LCD 24, un élément de blindage électromagnétique 21 soudé sur la carte PCB 10 et un verre 22 protégeant le module d'affichage LCD 24. La pièce de support 23 comprend un élément de réception 232 d'un dispositif de mise sous pression 12 et un élément d'attache sous forme d'une patte 231. L'élément de réception 232 présente la forme d'un cylindre. Le dispositif de mise sous pression 12 est inséré à l'intérieur du cylindre et n'est pas visible dans la figure 2. Le dispositif de mise sous pression peut être un « *puck* » (de l'anglais pour « palet »). Un « *puck* » est un cylindre en matière souple, déformable et généralement électriquement conducteur qui permet de mettre en contact, sur un circuit imprimé, un anneau externe et un anneau interne (fausse touche). Lorsqu'une pression suffisante est exercée sur le *« puck »,* le courant électrique passe entre l'anneau interne et l'anneau externe de la fausse touche. Quand le courant passe correctement dans cette fausse touche, le dispositif s'auto-diagnostique comme étant dans un état de fonctionnement correct. Il se peut également que la matière ne soit pas électriquement conductrice, auquel cas un dôme métallique est adjoint au *« puck »* afin de remplir la fonction de conduction de courant entre l'anneau externe et l'anneau interne de la fausse touche. Dans ce mode de réalisation, la patte 231 est maintenue dans une encoche 210 disposée dans l'élément de blindage électromagnétique 21 (dans d'autres modes de réalisation, l'encoche peut être disposée dans un autre élément). Dans ce mode de réalisation, la patte 231 et le cylindre de mise sous pression 232 sont proches l'un de l'autre afin de créer un effet synergique de répartition de force d'un élément vers l'autre. Plus particulièrement, la patte 231 et le cylindre de mise sous pression 232 sont séparés, sur le support d'une distance comprise entre 1 millimètre et 10 millimètres.

Une force de maintien FM vers le bas est exercée sur la patte 231 pour compenser au moins une partie de la force FD' vers le haut exercée par le dispositif de mise sous pression 12. La déformation de la pièce de support 23 et du module d'affichage LCD 24 est ainsi allégée ou éliminée. Dans ce mode de réalisation, l'élément de blindage 21 remplit deux fonctions distinctes : une première fonction consistant à protéger les signaux transmis sur la carte PCB (i.e. les signaux transmis entre les composants se situant à l'intérieur du volume protégé par le blindage) ; et une deuxième fonction consistant à servir d'élément de maintien de la patte 231 de la pièce de support 23. Ce qui permet, dans ce mode de réalisation, d'assurer qu'une tentative de démontage de la pièce de support, au niveau de la patte 231 et/ou de l'encoche 210, entraîne une détérioration de l'élément de blindage 21 (par déformation ou coupure). Or l'élément de blindage 21 comprend également des protections anti intrusion, telles que des treillis de circuits imprimés. De tels circuits permettent de détecter une tentative d'intrusion et/ou de démontage. Ainsi, compte tenu de cette configuration particulière, la fonction de maintien (et donc de repport de force) et la fonction de protection sont intimement liées. Dès lors, la combinaison de ces deux fonctions au sein d'une même pièce concourt à l'augmentation de la sécurité de l'ensemble du dispositif en plus de la résolution du problème initial.

Selon un autre mode de réalisation, un élément de maintien remplissant uniquement la fonction de maintien de la patte 231 peut être soudé sur la carte PCB 10.

La carte PCB 10 (comprenant une fausse touche 101), l'élément de blindage électromagnétique 21, la pièce de support 23 recevant un dispositif de mise sous pression 12 constituent un système de sécurisation illustré en relation avec la figure 3 et la figure 4. La figure 3 illustre aussi les forces exercées entre les composants du système de sécurisation. Plus précisément, la force FM est celle exercée sur la patte 231 de la pièce de support 23 par l'élément de maintien (l'élément de blindage 21). La force FC est celle exercée sur la pièce de support 23 par le composant (le module d'affichage LCD 24). La force FD est celle exercée sur la fausse touche 101 par le dispositif de mise sous pression 12. La force FD' est celle exercée sur la pièce de support 23 par le dispositif de mise sous pression 12. Il est entendu que la valeur de la force FD est égale à celle de la force FD' et est suffisante pour activer la fausse touche 101. Dans le dispositif électronique de l'état de la technique, la force FC compense la totalité de la force FD'. Une force FC élevée entraine ainsi une déformation importante du module d'affichage LCD 24. Selon la technique proposée, la pièce de support 23 comprend un élément d'attache (patte 231) permettant de générer une force FM pour compenser une partie ou la totalité de la force FD'. La force FC est ainsi diminuée et la déformation du module d'affichage LCD 24 est allégée ou éliminée.

Dans le cas où la force FM compense seulement une partie de la force FD', la valeur de la force FC est supérieure à zéro. On obtient l'équation ci-dessous :

$$|FD'| = |FD| = |FM| + |FC| \qquad (1)$$

Un des objectifs de la retenue dans l'encoche est de ne pas avoir un trop grand effort à fournir en périphérie de l'écran (loin du « puck ») pour conserver une détection d'ouverture du produit efficace. Lorsqu'un attaquant tente d'enlever le module d'affichage LCD 24, le module d'affichage LCD 24 ne peut plus maintenir la force FC de manière stable sur la pièce de support. Les forces exercées sur la pièce de support ne sont plus équilibrées. La force FD' qui est supérieur à la force FM, va entraîner une déformation de la pièce de support vers le haut. Le dispositif de mise sous pression se décompresse et les forces FD et FD' diminuent. La valeur de la force FD (diminuée) n'est plus suffisante pour induire l'activation de la fausse touche : la tentative de démontage du dispositif peut ainsi être détectée.

Dans le cas où la force FM compense la totalité de la force FD', la valeur de la force FC est supérieure à zéro. On obtient l'équation ci-dessous :

$$|FD'| = |FD| = |FM| \qquad (2)$$

En effet, la force FC est égale à zéro (ici, on néglige la pesanteur du module d'affichage LCD 24). Par conséquent, lorsqu'un attaquant enlève uniquement le module d'affichage LCD 24, la force FD reste inchangée et la fausse touche 101 reste en état activé. Cependant, lorsque l'attaquant continue à enlever la pièce de support 23, le dispositif de mise sous pression 10 se décompresse et la force FD diminue. Par conséquent, la fausse touche 101 devient désactivée et la tentative de démontage de la pièce de support peut ainsi être détectée.

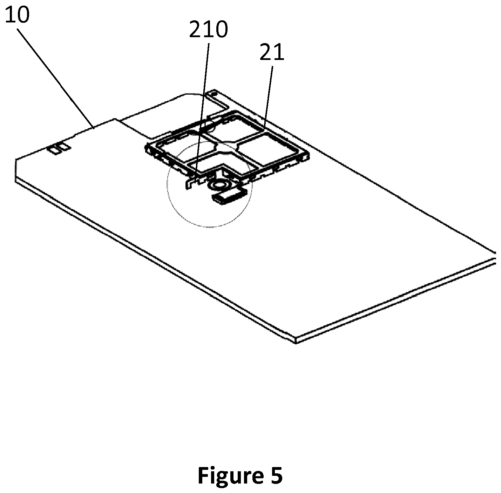

Comme exposé en figure 4 et 5 (reprenant les références numériques utilisées précédemment), dans ce mode de réalisation, la pièce de support 23 est de forme globalement parallélépipédique rectangle. Elle comprend une face antérieure (non représentée) sur laquelle l'écran est posé et une face postérieure (celle représentée en figure 4). Sur cette face postérieure, on trouve la patte 231 et le cylindre de mise sous pression 232 qui sont situés globalement en position centrale. Le cylindre de mise sous pression 232 est plus spécifiquement entouré d'un ensemble de parois de protection (23p1,... 23p5, les autres parois ne sont pas numérotées), un clip (23a1) et d'autres éléments de fixation. Les parois de protection sont conformées pour globalement constituer une barrière physique pour des composants qui sont soudés sur la carte mère sur laquelle la pièce de support vient s'emboîter. De la sorte, en sus d'une répartition de force optimisée, la pièce de support fait office barrière de protection pour d'autres composants électroniques. La pièce de support 23 se positionne au-dessus de l'élément de blindage 21 de la carte PCB 10 et la patte 231 vient prendre place dans l'encoche 210. Le parois de protection permettent ainsi de protéger des composants électroniques qui sont situés sur la carte PCB 10.

Les exemples de réalisation exposés précédemment ne le sont bien évidemment qu'à titre indicatif. L'homme du métier est en mesure de comprendre les avantages procurés par la présente technique et notamment les avantages procurés par l'utilisation d'une pièce de support comprenant un élément d'attache.

**Revendications**

1. Pièce de support (23) d'un module d'affichage LCD d'un dispositif électronique, comprenant au moins un élément de réception d'un dispositif de mise sous pression d'une fausse touche (232), ladite pièce étant **caractérisée en ce qu'**elle comprend au moins un élément d'attache (231) pour retenir ladite pièce à une carte PCB du dispositif électronique de sorte que le dispositif de mise sous pression est compressé entre ladite pièce de support et ladite carte PCB.

2. Pièce de support selon la revendication 1, **caractérisée en ce que** ledit élément de réception (232) est un cylindre apte à recevoir une portion dudit dispositif de mise sous pression.

3. Pièce de support selon la revendication 1, **caractérisée en ce que** ledit élément d'attache prend la forme d'une patte.

4. Système de sécurisation d'un dispositif électronique, comprenant une pièce de support (23) d'un module d'affichage LCD et une carte PCB comprenant au moins une fausse touche, ladite pièce de support comprenant au moins un élément de réception (232) recevant un dispositif de mise sous pression de ladite fausse touche, ledit système étant **caractérisé en ce que** ladite pièce de support comprend un élément d'attache (231) configuré pour retenir ladite pièce de support à la carte PCB de sorte que le dispositif de mise sous pression est compressé entre ladite pièce de support et ladite carte PCB.

5. Système de sécurisation selon la revendication 4, **caractérisé en ce que** ledit élément de réception (232) est un cylindre, une portion du dispositif de mise sous pression étant insérée dans ledit cylindre.

6. Système de sécurisation selon la revendication 4, **caractérisé en ce que** ledit élément d'attache prend la forme d'une patte.

7. Système de sécurisation selon la revendication 6, **caractérisé en ce qu'**il comprend un élément de maintien soudé sur ladite carte PCB, ladite patte étant insérée dans une encoche disposée dans ledit élément de maintien.

8. Système de sécurisation selon la revendication 7, **caractérisé en ce que** ledit élément de maintien fait partie d'un élément de blindage électromagnétique solidarisé à ladite carte PCB.

9. Dispositif électronique **caractérisé en ce qu'**il comprend un système de sécurisation selon une quelconque des revendications 4 à 8.

10. Dispositif électronique selon la revendication 9, **caractérisé en ce qu'**un élément d'attache attachée à la carte PCB génère une force FM maintenant ladite pièce de support attachée à ladite carte PCB, ledit dispositif de mise sous pression exerçant une force FD sur la fausse touche de la carte PCB et une force FD' sur la pièce de support, ledit composant exerçant une force FC sur ladite pièce de support, la force FD étant suffisante pour activer la fausse touche.

11. Dispositif électronique selon la revendication 9, **caractérisé en ce que** la valeur de la force FM est égale à la valeur de la force FD'.

12. Dispositif électronique selon la revendication 9, **caractérisé en ce que** la valeur de la force FD' est égale à la valeur de la somme de la force FM et de la force FC, la valeur de la force FC étant supérieure à zéro.

13. Dispositif électronique selon la revendication 9, **caractérisé en ce qu'**il comprend un boîtier, ledit module d'affichage étant disposé entre la partie supérieure dudit boîtier et la pièce de support.

14. Dispositif électronique selon la revendication 9, **caractérisé en ce que** ledit dispositif électronique est un terminal de paiement.

**Patentansprüche**

1. Stützteil (23) für ein LCD-Anzeigemodul einer elektronischen Vorrichtung, umfassend mindestens ein Element zur Aufnahme einer Vorrichtung zur Druckbeaufschlagung einer Blindtaste (232), wobei das Teil **dadurch gekenn-**

zeichnet ist, dass es mindestens ein Befestigungselement (231) umfasst, um das Teil an einer Karte PCB der elektronischen Vorrichtung zu halten, so dass die Vorrichtung zur Druckbeaufschlagung zwischen dem Stützteil und der PCB-Karte komprimiert wird.

2. Stützteil nach Anspruch 1, **dadurch gekennzeichnet, dass** das Aufnahmeelement (232) ein Zylinder ist, der geeignet ist, einen Abschnitt der Vorrichtung zur Druckbeaufschlagung aufzunehmen.

3. Stützteil nach Anspruch 1, **dadurch gekennzeichnet, dass** das Befestigungselement die Form einer Klaue annimmt.

4. System zur Sicherung einer elektronischen Vorrichtung, umfassend ein Stützteil (23) für ein LCD-Anzeigemodul und eine Karte PCB, umfassend mindestens eine Blindtaste, wobei das Stützteil mindestens ein Aufnahmeelement (232) umfasst, das eine Vorrichtung zur Druckbeaufschlagung der Blindtaste aufnimmt, wobei das System **dadurch gekennzeichnet ist, dass** das Stützteil ein Befestigungselement (231) umfasst, das eingerichtet ist, um das Stützteil an der PCB-Karte zu halten, so dass die Vorrichtung zur Druckbeaufschlagung zwischen dem Stützteil und der PCB-Karte komprimiert wird.

5. Sicherungssystem nach Anspruch 4, **dadurch gekennzeichnet, dass** das Aufnahmeelement (232) ein Zylinder ist, wobei ein Abschnitt der Vorrichtung zur Druckbeaufschlagung in den Zylinder eingesetzt ist.

6. Sicherungssystem nach Anspruch 4, **dadurch gekennzeichnet, dass** das Befestigungselement die Form einer Klaue annimmt.

7. Sicherungssystem nach Anspruch 6, **dadurch gekennzeichnet, dass** es ein Halteelement umfasst, das auf die PCB-Karte geschweißt ist, wobei die Klaue in eine Kerbe eingesetzt wird, die in dem Halteelement angeordnet ist.

8. Sicherungssystem nach Anspruch 7, **dadurch gekennzeichnet, dass** das Halteelement Teil eines Elements zur elektromagnetischen Abschirmung ist, das mit der PCB-Karte verbunden ist.

9. Elektronische Vorrichtung, **dadurch gekennzeichnet, dass** sie ein Sicherungssystem nach einem der Ansprüche 4 bis 8 umfasst.

10. Elektronische Vorrichtung nach Anspruch 9, **dadurch gekennzeichnet, dass** ein Befestigungselement, das an der PCB-Karte befestigt ist, eine Kraft FM erzeugt, die das Stützteil an der PCB-Karte befestigt hält, wobei die Vorrichtung zur Druckbeaufschlagung eine Kraft FD auf die Blindtaste der PCB-Karte und eine Kraft FD' auf das Stützteil ausübt, wobei das Bauteil eine Kraft FC auf das Stützteil ausübt, wobei die Kraft FD ausreicht, um die Blindtaste zu aktivieren.

11. Elektronische Vorrichtung nach Anspruch 9, **dadurch gekennzeichnet, dass** der Wert der Kraft FM gleich dem Wert der Kraft FD' ist.

12. Elektronische Vorrichtung nach Anspruch 9, **dadurch gekennzeichnet, dass** der Wert der Kraft FD' gleich dem Wert der Summe der Kraft FM und der Kraft FC ist, wobei der Wert der Kraft FC größer als Null ist.

13. Elektronische Vorrichtung nach Anspruch 9, **dadurch gekennzeichnet, dass** sie ein Gehäuse umfasst, wobei das Anzeigemodul zwischen dem oberen Teil des Gehäuses und dem Stützteil angeordnet ist.

14. Elektronische Vorrichtung nach Anspruch 9, **dadurch gekennzeichnet, dass** die elektronische Vorrichtung ein Zahlungsendgerät ist.

## Claims

1. Support part (23) for supporting an LCD display module of an electronic device, comprising at least one receiving element for receiving a pressing device for pressing on a dummy key (232), said part being **characterized in that** it comprises at least one attaching element (231) to secure said part to a PCB of the electronic device such that the pressing device is compressed between said support part and said PCB.

2. Support part according to claim 1, **characterized in that** said receiving element (232) is a cylinder capable of receiving a portion of said pressing device.

3. Support part according to claim 1, **characterized in that** said attaching element takes the form of a toe.

4. System for securing an electronic device comprising a support part (23) for supporting an LCD display device and a PCB comprising at least one dummy key, said support part comprising at least one receiving element (232) for receiving a device for pressing on said dummy key, said system being **characterized in that** said support part comprises an attaching element (231) configured to secure said support part to the PCB such that the pressing device is compressed between said support part and said PCB.

5. System for securing according to claim 4, **characterized in that** said receiving element (232) is a cylinder, a portion of the pressing device being inserted into said cylinder.

6. System for securing according to claim 4, **characterized in that** said attaching element takes the form of a toe.

7. System for securing according to claim 6, **characterized in that** it comprises a holding element soldered to said PCB board, said toe being inserted into a notch disposed in said holding element.

8. System for securing according to claim 7, **characterized in that** said holding element forms part of an electromagnetic shielding element fixedly attached to said PCB.

9. Electronic device **characterized in that** it comprises a securing system according to any one of the claims 4 to 8.

10. Electronic device according to claim 9, **characterized in that** an attaching element attached to the PCB board generates a force FM that holds said support part attached to said PCB board, said pressing device exerting a force FD on the dummy key of the PCB board and a force FD' on the support part, said component exerting a force FC on said support part, the force FD being sufficient to activate the dummy key.

11. Electronic device according to claim 9, **characterized in that** the value of the force FM is equal to the value of the force FD'.

12. Electronic device according to claim 9, **characterized in that** the value of the force FD' is equal to the value of the sum of the force FM and the force FC, the value of the force FC being greater than zero.

13. Electronic device according to claim 9, **characterized in that** it comprises a casing, said display module being disposed between the upper part of said casing and the support part.

14. Electronic device according to claim 9, **characterized in that** said electronic device is a payment terminal.

**Figure 1**

**Figure 2**

**Figure 3**

**Figure 4**

**Figure 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1346384 A